# EUROPEAN PATENT APPLICATION

(11) **EP 4 672 799 A1**
(43) Date of publication of application: **31.12.2025**
(21) Application number: 24777902.8
(22) Date of filing: 22.03.2024
(51) Int. Cl.: H04W 16/22, H04W 24/02

(54) **COMMUNICATION METHOD AND APPARATUS**

(30) Priority: 24.03.2023 CN 202310304891
(71) Applicant: Huawei Technologies Co., Ltd., Shenzhen, Guangdong 518129 (CN)
(72) Inventor: XU, Ruiyue, Shenzhen, Guangdong 518129 (CN)
(74) Representative: Pfenning, Meinig & Partner mbB
(86) International application number: PCT/CN2024/083230
(87) International publication number: WO 2024/199113

(57) **Abstract**

This application provides a communication method and apparatus, and relates to the field of communication technologies. The method includes: A first device sends capability information to a second device, so that the second device can send control information to the first device based on the capability information. The control information indicates that a first ML model corresponding to a first MnF on the first device is allowed to be trained. Therefore, the first device may train the first ML model based on the control information. In this way, the first device may autonomously determine whether actual application effect of the first ML model meets current network or service performance, and the control information configured by the second device can meet a capability of the first device. This avoids a problem that ML model training fails due to that the control information is outside a capability range of the first device, and consequently network and service performance cannot be ensured in a timely manner.

## Description

This application claims priority to Chinese Patent Application No. 202310304891.9, filed with the China National Intellectual Property Administration on March 24, 2023, and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With introduction of vertical industries, an increase of terminal devices, and diversified services, a network of an operator becomes increasingly complex, making network operation and maintenance more difficult. How to reduce network operation and maintenance costs, simplify a network operation and maintenance process, and quickly deploy a network to meet the diversified services is an urgent problem to be resolved for network operation and maintenance. Therefore, an automation or intelligence technology is introduced for network management units and network elements in a telecommunications system to implement an intelligent network function, that is, implement a management function (management function, MnF) by using the automation or intelligence technology.

Currently, for an MnF, an operator network management device may deliver a model of the MnF to a device such as an equipment vendor network management device or a network element device by interacting with the equipment vendor network management device a plurality of times. However, network or service performance that an operator needs to implement for an MnF changes in real time according to a service requirement. Therefore, effect achieved when the model delivered by the operator network management device implements the MnF may not meet current network or service performance. Therefore, how to ensure network or service performance becomes an urgent technical problem to be resolved at a current stage.

### SUMMARY

This application provides a communication method and apparatus, to implement autonomous management of an MnF model, and quickly ensure network or service performance.

According to a first aspect, a communication method is provided, including: A first device sends capability information to a second device, so that the second device can send control information to the first device based on the capability information. The control information indicates that a first machine learning (machine learning, ML) model corresponding to a first MnF on the first device is allowed to be trained. Therefore, the first device may train the first ML model based on the control information. The control information is associated with the capability information, and the first ML model is used to execute the first MnF.

In the foregoing implementation, content exchanged between the first device and the second device is the control information associated with the capability information, so that the first device can autonomously train the first ML model based on the control information, and can autonomously determine whether actual application effect of the first ML model meets current network or service performance, thereby quickly ensuring network and service performance. In addition, the control information configured by the second device can further meet a capability of the first device. This avoids a problem that ML model training fails due to that the control information is outside a capability range of the first device, and consequently network and service performance cannot be ensured in a timely manner.

The ML model is a type of mathematical algorithm model that uses a machine learning idea to resolve an actual problem.

The capability information indicates at least one of the following: The first MnF supports machine learning ML, or the first MnF supports online training of the ML model. Optionally, that the first MnF on the first device supports ML may be understood as follows: The first MnF supports an ML workflow (ML operational workflow). The ML workflow describes lifecycle management of an ML entity (ML entity), including at least one of the following:
ML training (ML training): Learn from training data, to generate a (new or updated) ML entity that may be used for inference.
ML test (ML test): Use test data to test the ML entity, to evaluate performance of the trained ML entity for inference.
ML deployment (ML deployment): Deploy (including installation and activation) the ML entity on a target inference entity, so that the target inference entity may use the ML entity for inference.
ML inference (ML inference): The target inference entity uses the ML entity to perform inference to obtain an inference result.

The ML entity is an ML model or an entity that includes an ML model.

The control information indicates that the first ML model corresponding to the first MnF is allowed to be trained. Alternatively, it may be understood as at least one of the following: The control information indicates that the first ML model is allowed to be trained by the second device, the control information indicates that the first ML model is allowed to be trained online, or the control information indicates that the first ML model is trained online by the second device.

Optionally, the control information is associated with the capability information. Alternatively, it may be understood as at least one of the following: The control information is generated based on the capability information, or the control information is within a range of the capability information.

In a possible implementation, the first MnF includes any one of the following: a management data analytic (management data analytic, MDA) MnF, an energy saving (energy saving, ES) MnF, a coverage and capacity optimization (coverage and capacity optimization, CC O) MnF, an intent handling (Intent Handling) MnF, and a network slice subnet (network slice subnet) MnF. For example, when the first device is an equipment vendor network management device and the second device is an operator network management device, the first MnF includes any one of the following: the management data analytic MnF, the energy saving MnF, the coverage and capacity optimization MnF, the intent handling MnF, and the network slice subnet MnF.

In another possible implementation, the first MnF includes any one of the following: an automatic neighbor relation (automatic neighbor relation, ANR) MnF, a mobility load balancing (mobility load balancing, MLB) MnF, a mobility robustness optimization (mobility robustness optimization, MRO) MnF, a physical cell identifier optimization (physical cell identifier optimization, PCIO) MnF, a random access channel optimization (random access channel optimization, RACHO) MnF, and a traffic steering (traffic steering) MnF. For example, when the first device is a network element device and the second device is an operator network management device, the first MnF includes any one of the following: the automatic neighbor relation MnF, the mobility load balancing MnF, the mobility robustness optimization MnF, the physical cell identifier optimization MnF, the random access channel optimization MnF, and the traffic steering MnF.

With reference to the first aspect, in a possible implementation, the control information further indicates at least one of the following: a frequency at which the first ML model is allowed to be trained, a time period in which the first ML model is allowed to be trained, or a time period in which the first ML model is prohibited from being trained. The frequency at which the first ML model is allowed to be trained may be understood as at least one of the following: a maximum quantity of times the first ML model is allowed to be trained in a unit time, or a maximum quantity of times the first ML model is allowed to be trained by the second device in a unit time. The unit time in this application may be at least one hour, at least one day, at least one week, at least one month, at least one year, or the like. The time period in which the first ML model is allowed to be trained may be understood as a time period in which the first ML model is allowed to be trained by the second device. The time period in which the first ML model is prohibited from being trained may be understood as a time period in which the first ML model is prohibited from being trained by the second device.

In the foregoing implementation, the first device can autonomously train the first ML model based on content indicated by the control information.

With reference to the first aspect, in a possible implementation, the capability information further indicates a frequency of ML model training supported by the first MnF. Alternatively, it may be understood as a maximum quantity of training times supported by the first MnF in a unit time.

In the foregoing implementation, the second device can learn of the frequency of ML model training supported by the first MnF. This can avoid a problem that ML model training fails due to that the control information is outside a capability range of the first device, and a problem that time consumption is increased due to ML model retraining.

Optionally, the frequency of ML model training supported by the first MnF may be one or more frequencies of ML model training supported by the first MnF, or may be understood as a set of quantities of times supported by the first MnF. The set of quantities of times includes a maximum quantity of training times in one or more unit times.

With reference to the first aspect, in a possible implementation, the method further includes: The first device sends running information of the first ML model to the second device. The running information of the first ML model includes at least one of the following: version information of the first ML model, training status information of the first ML model, a quantity of historical training times of the first ML model, latest training time of the first ML model, or a historical training record of the first ML model.

In the foregoing implementation, the second device can learn of the running information of the first ML model, so that the first ML model can be better managed. For example, the control information can be adjusted.

The version information of the first ML model may be a version number and/or version time of the first ML model. The training status information of the first ML model may include training started, training in progress, or training completed. The quantity of historical training times of the first ML model may include a quantity of successful training times and/or a quantity of failed training times. The historical training record of the first ML model may include at least one of the following: start time of historical training of the first ML model, end time of historical training of the first ML model, or a historical training result (including failed or successful training) of the first ML model.

With reference to the first aspect, in a possible implementation, the control information further indicates the first device to send the running information of the first ML model to the second device.

With reference to the first aspect, in a possible implementation, that the first device sends the capability information to the second device includes: The first device sends the capability information to the second device through an interface corresponding to the first MnF. The method further includes: The first device sends a type of the first MnF to the second device through the interface corresponding to the first MnF. It may also be understood that the capability information and the type of the first MnF are simultaneously sent by the first device to the second device through the interface corresponding to the first MnF.

In the foregoing implementation, the capability information may be transmitted to the second device through the interface used for sending the type of the first MnF. This avoids a conflict caused by separately managing and controlling a same MnF through two interfaces.

The type of the first MnF may be a management data analytic MnF, an energy saving MnF, a coverage and capacity optimization MnF, an intent handling MnF, or a network slice subnet MnF. For example, when the first device is an equipment vendor network management device and the second device is an operator network management device, the type of the first MnF may be the management data analytic MnF, the energy saving MnF, the coverage and capacity optimization MnF, the intent handling MnF, or the network slice subnet MnF.

Alternatively, the type of the first MnF may be an automatic neighbor relation MnF, a mobility load balancing MnF, a mobility robustness optimization MnF, a physical cell identifier optimization MnF, a random access channel optimization MnF, or a traffic steering MnF. For example, when the first device is a network element device and the second device is an operator network management device, the type of the first MnF may be the automatic neighbor relation MnF, the mobility load balancing MnF, the mobility robustness optimization MnF, the physical cell identifier optimization MnF, the random access channel optimization MnF, or the traffic steering MnF.

With reference to the first aspect, in a possible implementation, that the first device receives the control information from the second device includes: The first device receives the control information from the second device through an interface corresponding to the first MnF. The method further includes: The first device receives management status information of the first MnF from the second device through the interface corresponding to the first MnF. It may also be understood that the control information and the management status information of the first MnF are simultaneously sent by the second device to the first device through the interface corresponding to the first MnF.

In the foregoing implementation, the control information may be transmitted to the first device through the interface used for sending the management status information of the first MnF. This avoids a conflict caused by separately managing and controlling a same MnF through two interfaces.

The management status information of the first MnF indicates to enable or disable the first MnF.

With reference to the first aspect, in a possible implementation, that the first device sends the running information of the first ML model to the second device includes: The first device sends the running information of the first ML model to the second device through an interface corresponding to the first MnF. The method further includes: The first device sends running information of the first MnF to the second device through the interface corresponding to the first MnF. It may also be understood that the running information of the first ML model and the running information of the first MnF are simultaneously sent by the first device to the second device through the interface corresponding to the first MnF.

In the foregoing implementation, the running information of the first ML model may be transmitted to the second device through the interface used for sending the running information of the first MnF. This avoids a conflict caused by separately managing and controlling a same MnF through two interfaces.

The running information of the first MnF may include: Running of the first MnF is started, running of the first MnF is in progress, the first MnF is suspended, or the like.

According to a second aspect, a communication method is provided, including: A second device may receive capability information from a first device, so that the second device can send control information to the first device based on the capability information. The control information indicates that a first ML model corresponding to a first MnF is allowed to be trained, and the first ML model is used to execute the first MnF.

In the foregoing implementation, content exchanged between the first device and the second device is the control information associated with the capability information, so that the first device can autonomously train the first ML model based on the control information, and can autonomously determine whether actual application effect of the first ML model meets current network or service performance, thereby quickly ensuring network and service performance. In addition, the control information configured by the second device can further meet a capability of the first device. This avoids a problem that ML model training fails due to that the control information is outside a capability range of the first device, and consequently network and service performance cannot be ensured in a timely manner.

With reference to the second aspect, in a possible implementation, the control information further indicates at least one of the following: a frequency at which the first ML model is allowed to be trained, a time period in which the first ML model is allowed to be trained, or a time period in which the first ML model is prohibited from being trained.

In the foregoing implementation, the first device can autonomously train the first ML model based on content indicated by the control information.

With reference to the second aspect, in a possible implementation, the capability information further indicates a frequency of ML model training supported by the first MnF.

In the foregoing implementation, the second device can learn of the frequency of ML model training supported by the first MnF. This can avoid a problem that ML model training fails due to that the control information is outside a capability range of the first device, and a problem that time consumption is increased due to ML model retraining.

With reference to the second aspect, in a possible implementation, the method further includes: The second device receives running information of the first ML model from the first device. The running information of the first ML model includes at least one of the following: version information of the first ML model, training status information of the first ML model, a quantity of historical training times of the first ML model, latest training time of the first ML model, or a historical training record of the first ML model.

In the foregoing implementation, the second device can learn of the running information of the first ML model, so that the first ML model can be better managed. For example, the control information can be adjusted.

With reference to the second aspect, in a possible implementation, the control information further indicates the first device to send the running information of the first ML model to the second device.

With reference to the second aspect, in a possible implementation, that the second device receives the capability information from the second device includes: The second device receives the capability information from the second device through an interface corresponding to the first MnF. The method further includes: The second device receives a type of the first MnF from the second device through the interface corresponding to the first MnF.

In the foregoing implementation, the capability information may be transmitted to the second device through the interface used for sending the type of the first MnF. This avoids a conflict caused by separately managing and controlling a same MnF through two interfaces.

With reference to the second aspect, in a possible implementation, that the second device sends the control information to the first device includes: The second device sends the control information to the first device through an interface corresponding to the first MnF. The method further includes: The second device sends management status information of the first MnF to the first device through the interface corresponding to the first MnF.

In the foregoing implementation, the control information may be transmitted to the second device through the interface used for sending the management status information of the first MnF. This avoids a conflict caused by separately managing and controlling a same MnF through two interfaces.

With reference to the second aspect, in a possible implementation, that the second device receives the running information of the first ML model from the first device includes: The second device receives the running information of the first ML model from the first device through an interface corresponding to the first MnF. The method further includes: The second device receives running information of the first MnF from the first device through the interface corresponding to the first MnF.

In the foregoing implementation, the running information of the first ML model may be transmitted to the second device through the interface used for sending the running information of the first MnF. This avoids a conflict caused by separately managing and controlling a same MnF through two interfaces.

According to a third aspect, a communication method is provided, including: A second device may receive capability information from a first device, so that the second device can send control information to the first device based on the capability information. The control information indicates that a first ML model corresponding to a first MnF on the first device is allowed to be trained. Therefore, the first device may train the first ML model based on the control information. The control information is associated with the capability information, and the first ML model is used to execute the first MnF.

In the foregoing implementation, content exchanged between the first device and the second device is the control information associated with the capability information, so that the first device can autonomously train the first ML model based on the control information, and can autonomously determine whether actual application effect of the first ML model meets current network or service performance, thereby quickly ensuring network and service performance. In addition, the control information configured by the second device can further meet a capability of the first device. This avoids a problem that ML model training fails due to that the control information is outside a capability range of the first device, and consequently network and service performance cannot be ensured in a timely manner.

With reference to the third aspect, in a possible implementation, the control information further indicates at least one of the following: a frequency at which the first ML model is allowed to be trained, a time period in which the first ML model is allowed to be trained, or a time period in which the first ML model is prohibited from being trained.

In the foregoing implementation, the first device can autonomously train the first ML model based on content indicated by the control information.

With reference to the third aspect, in a possible implementation, the capability information further indicates a frequency of ML model training supported by the first MnF.

In the foregoing implementation, the second device can learn of the frequency of ML model training supported by the first MnF. This can avoid a problem that ML model training fails due to that the control information is outside a capability range of the first device, and a problem that time consumption is increased due to ML model retraining.

With reference to the third aspect, in a possible implementation, the method further includes: The first device sends running information of the first ML model to the second device. The running information of the first ML model includes at least one of the following: version information of the first ML model, training status information of the first ML model, a quantity of historical training times of the first ML model, latest training time of the first ML model, or a historical training record of the first ML model.

In the foregoing implementation, the second device can learn of the running information of the first ML model, so that the first ML model can be better managed. For example, the control information can be adjusted.

With reference to the third aspect, in a possible implementation, the control information further indicates the first device to send the running information of the first ML model to the second device.

With reference to the third aspect, in a possible implementation, that the first device sends the capability information to the second device includes: The first device sends the capability information to the second device through an interface corresponding to the first MnF. The method further includes: The first device sends a type of the first MnF to the second device through the interface corresponding to the first MnF.

In the foregoing implementation, the capability information may be transmitted to the second device through the interface used for sending the type of the first MnF. This avoids a conflict caused by separately managing and controlling a same MnF through two interfaces.

With reference to the third aspect, in a possible implementation, that the first device receives the control information from the second device includes: The first device receives the control information from the second device through an interface corresponding to the first MnF. The method further includes: The first device receives management status information of the first MnF from the second device through the interface corresponding to the first MnF.

In the foregoing implementation, the control information may be transmitted to the second device through the interface used for sending the management status information of the first MnF. This avoids a conflict caused by separately managing and controlling a same MnF through two interfaces.

With reference to the third aspect, in a possible implementation, that the first device sends the running information of the first ML model to the second device includes: The first device sends the running information of the first ML model to the second device through an interface corresponding to the first MnF. The method further includes: The first device sends running information of the first MnF to the second device through the interface corresponding to the first MnF.

In the foregoing implementation, the running information of the first ML model may be transmitted to the second device through the interface used for sending the running information of the first MnF. This avoids a conflict caused by separately managing and controlling a same MnF through two interfaces.

According to a fourth aspect, a communication system is provided. The communication system includes a first device and a second device, the first device is configured to perform the method according to any one of the implementations of the first aspect, and the second device is configured to perform the method according to the second aspect.

According to a fifth aspect, a communication apparatus is provided, including a unit or a module configured to implement the method in either the first aspect or the second aspect.

According to a sixth aspect, a communication apparatus is provided, including a processor. The processor invokes a computer program stored in a memory to implement the method in either the first aspect or the second aspect.

According to a seventh aspect, a computer-readable storage medium is provided. The computer-readable storage medium stores a computer program. When the computer program runs, the method in either the first aspect or the second aspect is implemented.

According to an eighth aspect, a chip is provided. The chip includes at least one processor and an interface. The processor is configured to read and execute instructions stored in a memory. When the instructions are run, the chip is enabled to perform the method in either the first aspect or the second aspect.

According to a ninth aspect, a computer program product including instructions is provided. When the instructions are executed on a computer, the method in either the first aspect or the second aspect is performed.

### BRIEF DESCRIPTION OF DRAWINGS

The following briefly describes the accompanying drawings used for describing embodiments.
FIG. 1 shows a system architecture according to an embodiment of this application;
FIG. 2 shows an example of the system architecture shown in FIG. 1;
FIG. 3 is a schematic flowchart of a communication method according to an embodiment of this application;
FIG. 4 is a schematic flowchart of another communication method according to an embodiment of this application;
FIG. 5 is a schematic flowchart of another communication method according to an embodiment of this application; and
FIG. 6 is a diagram of a structure of a communication apparatus according to an embodiment of this application.

### DESCRIPTION OF EMBODIMENTS

The following describes technical solutions in embodiments of this application with reference to the accompanying drawings in embodiments of this application. The terms "system" and "network" may be used interchangeably in embodiments of this application. Unless otherwise specified, "/" indicates an "or" relationship between associated objects. For example, A/B may indicate A or B. In this application, "and/or" describes only an association relationship between associated objects and indicates that three relationships may exist. For example, A and/or B may indicate the following three cases: Only A exists, both A and B exist, and only B exists, where A or B may be singular or plural. In addition, in the descriptions of this application, "a plurality of" means two or more than two unless otherwise specified. "At least one of the following items (pieces)" or a similar expression thereof means any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural. In addition, to clearly describe the technical solutions in embodiments of this application, the terms such as "first" and "second" are used in embodiments of this application to distinguish between same items or similar items that provide basically same network elements or purposes. A person skilled in the art may understand that the terms such as "first" and "second" do not limit a quantity or an execution sequence, and the terms such as "first" and "second" do not indicate a definite difference.

Reference to "an embodiment", "some embodiments", or the like described in embodiments of this application indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

The objectives, technical solutions, and beneficial effect of this application are further described in detail in the following specific implementations. It should be understood that the following descriptions are merely specific implementations of this application, but are not intended to limit the protection scope of this application. Any modification, equivalent replacement, improvement, or the like made based on the technical solutions of this application shall fall within the protection scope of this application.

In embodiments of this application, unless otherwise stated or there is a logic conflict, terms and/or descriptions between different embodiments are consistent and may be mutually referenced, and technical features in different embodiments may be combined into a new embodiment based on an internal logical relationship thereof.

For ease of understanding, some concepts related to embodiments of this application are described below for reference by using examples. Details are as follows.

### 1. ML entity

The ML entity is an ML model or an entity that includes an ML model. The ML model is a type of mathematical algorithm model that uses a machine learning idea to resolve an actual problem.

A training mode of the ML model includes offline learning (online learning) and online learning (online learning).

Offline learning may also be referred to as offline training. Training data needs to be input into an ML model in batches for model training. A large amount of data is required for training. Offline learning is generally used to train a large or complex model. Therefore, a training process is often time-consuming, and a large amount of data needs to be processed.

Online learning may also be referred to as online training. Training data in a small batch or one by one needs to be used for model training. A small amount of data is required for training. Online learning is often applied to a scenario in which there is a high requirement on timeliness.

### 2. ML workflow

The ML workflow describes lifecycle management of an ML entity, including at least one of the following:

ML training: Learn from training data, to generate a (new or updated) ML entity that may be used for inference.

ML test: Use test data to test the ML entity, to evaluate performance of the trained ML entity for inference.

ML deployment: Deploy (including installation and activation) the ML entity on a target inference entity, so that the target inference entity may use the ML entity for inference.

ML inference: The target inference entity uses the ML entity to perform inference to obtain an inference result.

### 3. MnF

The MnF is an entity that provides a specific network or service management capability, for example, a management data analytic MnF, an energy saving MnF, a coverage and capacity optimization MnF, an intent handling MnF, a network slice subnet MnF, an automatic neighbor relation MnF, a mobility load balancing MnF, a mobility robustness optimization MnF, a physical cell identifier optimization MnF, a random access channel optimization MnF, or a traffic steering MnF.

It should be noted that the MnF in this application may be understood as an artificial intelligence-enabled management function (AI-enabled MnF), namely, an entity that provides a specific network or service management capability to implement lifecycle management of an ML entity. In this case, the management data analytic MnF, the energy saving MnF, the coverage and capacity optimization MnF, the intent handling MnF, the network slice subnet MnF, the automatic neighbor relation MnF, the mobility load balancing MnF, the mobility robustness optimization MnF, the physical cell identifier optimization MnF, the random access channel optimization MnF, and the traffic steering MnF may be respectively understood as an AI-enabled management data analytic (AI-enabled MDA) MnF, an AI-enabled energy saving (AI-enabled ES) MnF, an AI-enabled coverage and capacity optimization (AI-enabled CCO) MnF, an AI-enabled intent handling (AI-enabled Intent Handling) MnF, an AI-enabled network slice subnet (AI-enabled NSS) MnF, an AI-enabled automatic neighbor relation (AI-enabled ANR) MnF, an AI-enabled mobility load balancing (AI-enabled MLB) MnF, an AI-enabled mobility robustness optimization (AI-enabled MRO) MnF, an AI-enabled physical cell identifier optimization (AI-enabled PCIO) MnF, an AI-enabled random access channel optimization (AI-enabled RACHO) MnF, and an Al-enabled traffic steering (AI-enabled traffic steering) MnF. The following describes each MnF.

AI-enabled management data analytic MnF: An AI technology is used to analyze management data to obtain a management data analytic result, for example, discover a network problem and analyze a root cause of the network problem.

AI-enabled energy saving management function MnF: An AI technology is used to optimize network energy consumption and improve network energy efficiency.

AI-enabled coverage and capacity optimization MnF: An AI technology is used to optimize network coverage and capacity performance.

AI-enabled intent handling MnF: An AI technology is used to translate and evaluate a network or service intent.

AI-enabled network slice subnet MnF: An AI technology is used to deploy a network slice subnet and implement closed-loop assurance of service level agreement (service level agreement, SLA).

AI-enabled automatic neighbor relation MnF: A network element device (base station) uses an AI technology to automatically set a neighbor relation.

AI-enabled mobility load balancing MnF: A network element device (base station) uses an AI technology to automatically perform load balancing among a plurality of cells or a plurality of network elements.

AI-enabled mobility robustness optimization MnF: A network element device (base station) uses an AI technology to automatically perform mobility robustness optimization.

AI-enabled physical cell identifier optimization MnF: A network element device (base station) uses an AI technology to automatically allocate a physical cell identifier to a cell or adjust a physical cell identifier.

AI-enabled random access channel optimization MnF: A network element device (base station) uses an AI technology to automatically perform random access channel optimization.

AI-enabled traffic steering MnF: A network element device (base station) uses an AI technology to automatically perform traffic steering on service traffic forwarding.

### 4. Unique identifier name (distinguished name, DN)

The unique identifier name may also be referred to as a distinguished name, and indicates a name that uniquely identifies an entry in a directory information tree. The unique identifier name may determine an object, and a location of the object in the tree. Each object in an active directory has a unique identifier name.

The following describes a system architecture and a service scenario in embodiments of this application. It should be noted that the system architecture and the service scenario described in this application are intended to describe the technical solutions in this application more clearly, and do not constitute a limitation on the technical solutions provided in this application. A person of ordinary skill in the art may know that, with evolution of the system architecture and emergence of new service scenarios, the technical solutions provided in this application are also applicable to similar technical problems.

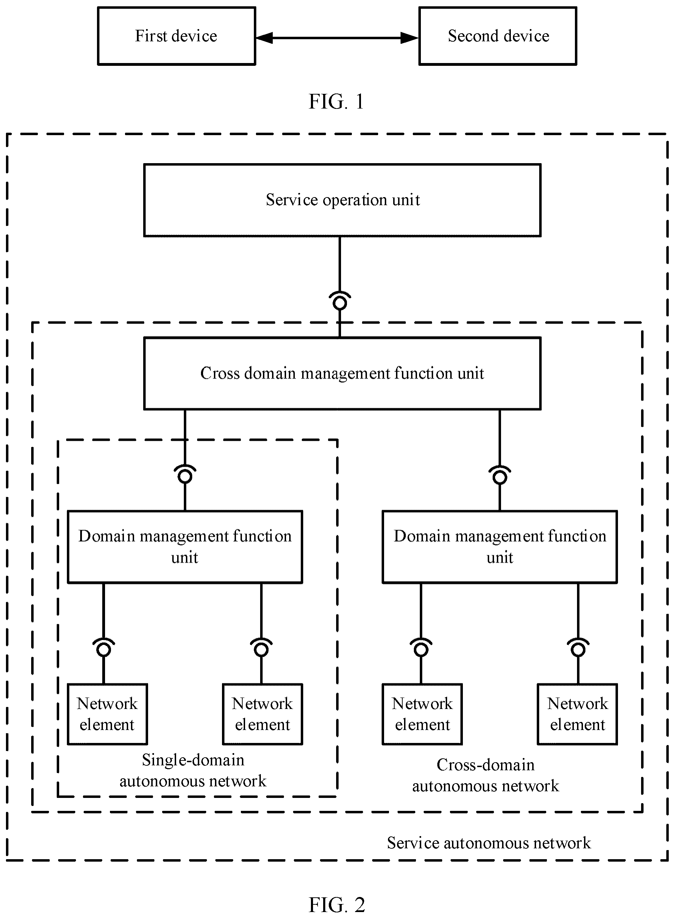

FIG. 1 shows a system architecture according to an embodiment of this application. The system architecture includes a first device and a second device. The first device may be referred to as an equipment vendor network management device, and the second device may be referred to as an operator network management device. Alternatively, the first device may be referred to as a network element device, and the second device may be referred to as an operator network management device. The operator network management device may be used to manage one or more equipment vendor network management devices. The equipment vendor network management device may install or update software or a module corresponding to an MnF, for example, software or modules corresponding to one or more of the following MnFs: the AI-enabled management data analytic MnF, the AI-enabled energy saving MnF, the AI-enabled coverage and capacity optimization MnF, the AI-enabled intent handling MnF, the AI-enabled network slice subnet MnF, and the like. The equipment vendor network management device may be used to manage one or more network element devices. The network element device may install or update software or a module corresponding to an MnF, for example, software or modules corresponding to one or more of the following MnFs: the AI-enabled automatic neighbor relation MnF, the AI-enabled mobility load balancing MnF, the AI-enabled mobility robustness optimization MnF, the AI-enabled physical cell identifier optimization MnF, the AI-enabled random access channel optimization MnF, the AI-enabled traffic steering MnF, and the like.

In a service-based management architecture, the first device may be a management service producer (management service producer, MnS Producer), and the second device may be a management service consumer (management service consumer, MnS Consumer).

For example, FIG. 2 shows an example of the system architecture shown in FIG. 1. As shown in FIG. 2, the system architecture may include a service operation unit, a cross domain management function (cross domain management function, CD-MnF) unit, a domain management function (domain management function, D-MnF) unit, and a network element (network element, NE). The service operation unit may be used to manage one or more cross domain management function units. The cross domain management function unit may be used to manage one or more domain management function units. The domain management function unit may be used to manage one or more network elements.

An autonomous network range may include the following three cases.

A single-domain autonomous network includes a network element and a domain management function unit.

A cross-domain autonomous network includes a network element, a domain management function unit, and a cross domain management function unit.

A service autonomous network includes a network element, a domain management function unit, a cross domain management function unit, and a service operation unit.

It should be noted that the first device may be a network element or a domain management function unit, and the second device may be a cross domain management function unit. Alternatively, the first device may be a cross domain management function unit, and the second device may be a service operation unit. Alternatively, the first device may be a service operation unit, and the second device may be another service operation unit or a third-party system located outside an autonomous network, for example, an enterprise system. The following briefly describes each unit.

### 1. Service operation unit

The service operation unit may also be referred to as a communication service management function (communication service management function) unit. The service operation unit may provide at least one of the following functions and management services: charging, settlement, accounting, customer service, business, network monitoring, communication service lifecycle management, service intent translation, or the like. The service operation unit may include an operation system of an operator (which may also be referred to as an operator network management device) or an operation system of a vertical industry (vertical operational technology system).

### 2. Cross domain management function unit

The cross domain management function unit may also be referred to as a network management function (network management function, NMF) unit. The cross domain management function unit may provide at least oneof the following functions or management services: network lifecycle management, network deployment, network fault management, network performance management, network configuration management, network assurance, a network optimization function, translation of a network intent from a communication service provider (intent from communication service provider, intent-CSP), translation of a network intent from a communication service consumer (intent from communication service consumer, intent-CSC), or the like. The network herein may include at least one network element, a subnetwork, or a network slice. For example, the cross domain management function unit may be a network slice management function (network slice management function, NSMF) unit, a management data analytical function (management data analytical function, MDAF) unit, a cross domain self-organization network function (self-organization network function, SON-function) unit, or a cross domain intent management function unit.

It should be noted that, in some deployment scenarios, the cross domain management function unit may also provide at least one of the following functions or management services: subnetwork lifecycle management, subnetwork deployment, subnetwork fault management, subnetwork performance management, subnetwork configuration management, subnetwork assurance, a subnetwork optimization function, translation of a subnetwork intent from a communication service provider, translation of a subnetwork intent from a communication service consumer, or the like. The subnetwork may include a plurality of small subnetworks or a plurality of network slice subnetworks. For example, an access network subnetwork of an operator includes an access network subnetwork of an equipment vendor 1 and an access network subnetwork of an equipment vendor 2.

### 3. Domain management function unit

The domain management function unit may be referred to as a subnetwork management function (subnetwork management function, NMF) unit or a network element management function (network element/function management function) unit. The domain management function unit may provide at least one of the following functions and management services: subnetwork or network element lifecycle management, subnetwork or network element deployment, subnetwork or network element fault management, subnetwork or network element performance management, subnetwork or network element assurance, subnetwork or network element optimization management, subnetwork or network element intent translation, or the like. The subnetwork herein includes one or more network elements. Alternatively, the subnetwork herein may include one or more subnetworks, that is, the one or more subnetworks form a subnetwork with a larger coverage. Alternatively, the subnetwork herein may include one or more network slice subnetworks. The subnetwork may be described in at least one of the following manners:
a network in a technical domain, for example, a radio access network, a core network, or a transmission network;
a network of a specific standard, for example, a global system for mobile communications (global system for mobile communication, GSM) network, a long term evolution (long term evolution, LTE) network, or a 5th generation mobile communication technology network (5th generation mobile networks, 5G);
a network provided by an equipment vendor, for example, a network provided by an equipment vendor X; or
a network in a geographical area, for example, a network of a factory A or a network of a city B.

### 4. Network element

The network element is an entity that provides a network service, including a core network element, an access network element, and the like. For example, the core network element may include but is not limited to an access and mobility management function (access and mobility management function, AMF) entity, a session management function (session management function, SMF) entity, a policy control function (policy control function, PCF) entity, a network data analytics function (network data analysis function, NWDAF) entity, a network repository function (network repository function, NRF), a gateway, and the like. The access network element may include but is not limited to various types of base stations (for example, a next-generation NodeB (generation Node-B, gNB), an evolved NodeB (evolved Node-B, eNB), a central unit control plane (central unit control plane, CU-CP), a central unit (central unit, CU), a distributed unit (distributed unit, DU), and a central unit user plane (central unit user plane, CU-UP)).

In addition, in the service-based management architecture, there are a plurality of deployments focusing on providers and consumers of management services. For example, when the management service is a management service provided by the service operation unit, the service operation unit is a management service provider, and another service operator unit may be a management service consumer. For another example, when the management service is a management service provided by the cross domain management function unit, the cross domain management function unit is a management service provider, and the service operation unit is a management service consumer. For another example, when the management service is a management service provided by the domain management function unit, the domain management function unit is a management service provider, and the cross domain management function unit or the service operation unit is a management service consumer. For another example, when the management service is a management service provided by the network element, the network element is a management service provider, and the domain management function unit, the cross domain management function unit, or the service operation unit is a management service consumer.

It should be noted that the system architectures shown in FIG. 1 and FIG. 2 do not constitute a limitation on a system architecture to which embodiments of this application are applicable. Therefore, the communication method provided in embodiments of this application may be further applicable to communication systems of various standards, for example, an LTE communication system, a 5G communication system, a 6G communication system, a future communication system, V2X, LTE-vehicle (LTE-vehicle, LTE-V), vehicle to vehicle (vehicle to vehicle, V2V), internet of vehicles, machine type communication (machine type communication, MTC), IoT, LTE-machine to machine (LTE-machine to machine, LTE-M), M2M, and internet of things. In addition, it should be further noted that names of devices in the system architecture are not limited in embodiments of this application. For example, in communication systems of different standards, devices may have other names. For another example, when a plurality of devices are integrated into a same physical device, the physical device may alternatively have another name.

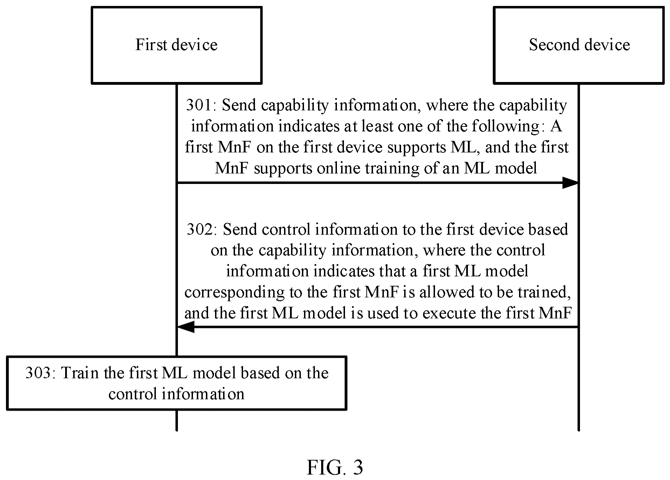

The following describes in detail communication methods provided in embodiments of this application with reference to FIG. 1 and FIG. 2. FIG. 3 shows a communication method according to an embodiment of this application. The communication method includes but is not limited to the following steps.

301: A first device sends capability information to a second device, where the capability information indicates at least one of the following: A first MnF on the first device supports ML, or the first MnF supports online training of an ML model.

Correspondingly, the second device receives the capability information from the first device.

In a possible implementation, the first MnF includes any one of the following: a management data analytic MnF, an energy saving MnF, a coverage and capacity optimization MnF, an intent handling MnF, and a network slice subnet MnF. For example, when the first device is an equipment vendor network management device and the second device is an operator network management device, the first MnF includes any one of the following: the management data analytic MnF, the energy saving MnF, the coverage and capacity optimization MnF, the intent handling MnF, and the network slice subnet MnF.

In another possible implementation, the first MnF includes any one of the following: an automatic neighbor relation MnF, a mobility load balancing MnF, a mobility robustness optimization MnF, a physical cell identifier optimization MnF, a random access channel optimization MnF, and a traffic steering MnF. For example, when the first device is a network element device and the second device is an operator network management device, the first MnF includes any one of the following: the automatic neighbor relation MnF, the mobility load balancing MnF, the mobility robustness optimization MnF, the physical cell identifier optimization MnF, the random access channel optimization MnF, and the traffic steering MnF.

That the first MnF on the first device supports ML may be understood as follows: The first MnF supports an ML workflow.

In a possible implementation, the capability information may further indicate a frequency of ML model training supported by the first MnF, or may be understood as a maximum quantity of training times supported by the first MnF in a unit time. The unit time herein may be at least one hour, at least one day, at least one week, at least one month, at least one year, or the like. For example, the first MnF supports training once an hour, or the first MnF supports training once a day, or the first MnF supports training once a week. In this way, the second device can learn of the frequency of ML model training supported by the first MnF. This can avoid a problem that ML model training fails due to that control information is outside a capability range of the first device, and a problem that time consumption is increased due to ML model retraining.

Optionally, the frequency of ML model training supported by the first MnF may be one or more frequencies of ML model training supported by the first MnF, or may be understood as a set of quantities of times supported by the first MnF. The set of quantities of times includes a maximum quantity of training times in one or more unit times.

In a possible implementation, step 301 may include: The first device sends the capability information to the second device through an interface corresponding to the first MnF.

When the first device is an equipment vendor network management device and the second device is an operator network management device, the interface corresponding to the first MnF may be an interface between the first device and the second device. Optionally, uplink and/or downlink transmission between the first device and the second device may be performed through the interface corresponding to the first MnF.

When the first device is a network element device and the second device is an operator network management device, the interface corresponding to the first MnF includes an interface between an equipment vendor network management device managing the first device and the second device and an interface between the first device and an equipment vendor network management device managing the first device. Optionally, uplink transmission between the first device and the second device means transmission first from the first device to the equipment vendor network management device through the interface between the first device and the equipment vendor network management device managing the first device, and then from the equipment vendor network management device to the second device through the interface between the equipment vendor network management device and the second device. For example, the first device sends the capability information to the equipment vendor network management device through the interface between the first device and the equipment vendor network management device, and the equipment vendor network management device sends the capability information to the second device through the interface between the equipment vendor network management device and the second device. Similarly, downlink transmission between the first device and the second device means transmission first from the second device to the equipment vendor network management device through the interface between the equipment vendor network management device and the second device, and then from the equipment vendor network management device to the first device through the interface between the first device and the equipment vendor network management device.

The following uses an example in which the first MnF is a management data analytic MDA MnF to describe the capability information. Specifically, the capability information may indicate at least one of the following: The management data analytic MnF on the first device supports coverage problem analysis ML (for example, the management data analytic MnF supports a coverage problem analysis ML workflow), or the management data analytic MnF supports online training of a coverage problem analysis ML model. Optionally, the capability information may further indicate a frequency of coverage problem analysis ML model training supported by the management data analytic MnF. For example, the management data analytic MnF supports training of the coverage problem analysis ML model once a day, or the management data analytic MnF supports training of the coverage problem analysis ML model twice a day.

Optionally, the method further includes: The first device sends a type of the first MnF to the second device through the interface corresponding to the first MnF. It may also be understood that the capability information and the type of the first MnF are simultaneously sent by the first device to the second device through the interface corresponding to the first MnF. This indicates that the capability information may be transmitted to the second device through the interface used for sending the type of the first MnF. This avoids a conflict caused by separately managing and controlling a same MnF through two interfaces.

In a possible implementation, the type of the first MnF may be a management data analytic MnF, an energy saving MnF, a coverage and capacity optimization MnF, an intent handling MnF, or a network slice subnet MnF. For example, when the first device is an equipment vendor network management device and the second device is an operator network management device, the type of the first MnF may be the management data analytic MnF, the energy saving MnF, the coverage and capacity optimization MnF, the intent handling MnF, or the network slice subnet MnF.

In another possible implementation, the type of the first MnF may be an automatic neighbor relation MnF, a mobility load balancing MnF, a mobility robustness optimization MnF, a physical cell identifier optimization MnF, a random access channel optimization MnF, or a traffic steering MnF. For example, when the first device is a network element device and the second device is an operator network management device, the type of the first MnF may be the automatic neighbor relation MnF, the mobility load balancing MnF, the mobility robustness optimization MnF, the physical cell identifier optimization MnF, the random access channel optimization MnF, or the traffic steering MnF.

302: The second device sends the control information to the first device based on the capability information, where the control information indicates that a first ML model corresponding to the first MnF is allowed to be trained, and the first ML model is used to execute the first MnF.

Correspondingly, the first device receives the control information from the second device.

The control information indicates that the first ML model corresponding to the first MnF is allowed to be trained. Alternatively, it may be understood as at least one of the following: The control information indicates that the first ML model is allowed to be trained by the second device, the control information indicates that the first ML model is allowed to be trained online, or the control information indicates that the first ML model is trained online by the second device.

Optionally, the control information may further indicate at least one of the following: a frequency at which the first ML model is allowed to be trained, a time period in which the first ML model is allowed to be trained, and a time period in which the first ML model is prohibited from being trained. The frequency at which the first ML model is allowed to be trained may be understood as at least one of the following: a maximum quantity of times the first ML model is allowed to be trained in a unit time, or a maximum quantity of times the first ML model is allowed to be trained by the second device in a unit time. The time period in which the first ML model is allowed to be trained may be understood as a time period in which the first ML model is allowed to be trained by the second device. The time period in which the first ML model is prohibited from being trained may be understood as a time period in which the first ML model is prohibited from being trained by the second device. In this way, the first device can autonomously train the first ML model based on content indicated by the control information.

The control information is associated with the capability information. Alternatively, it may be understood as at least one of the following: The control information is generated based on the capability information, or the control information is within a range of the capability information. For example, when the capability information indicates that the first MnF supports ML, the second device may determine, based on a training requirement for the first MnF and the capability information, the content indicated by the control information. Specifically, when the training requirement is to implement the first MnF by using AI and the capability information further indicates that the first MnF supports online training of the ML model, the control information indicates that the first ML model is allowed to be trained, for example, is allowed to be trained online. When the training requirement is to implement the first MnF not by using AI, the control information indicates that training of the first ML model is not allowed. For another example, when the capability information indicates the one or more frequencies of ML model training supported by the first MnF, the second device may determine one frequency from the one or more frequencies as a frequency indicated by the control information. Optionally, the frequency indicated by the control information is the same as a frequency included in the training requirement. In addition, the second device may further determine, based on the one or more frequencies and with reference to a service requirement of the second device, the time period in which the first ML model is allowed to be trained and/or the time period in which the first ML model is prohibited from being trained. For example, the management data analytic MnF supports training of the coverage problem analysis ML model once a day. If a major event needs to be guaranteed from 10:00 to 16:00 in the daytime, that is, from 10:00 to 16:00 in the daytime, coverage performance needs to be monitored in real time and the coverage problem analysis ML model cannot be trained, it can be determined that the coverage problem analysis ML model of the management data analytic MnF is prohibited from being trained from 10:00 to 16:00 in the daytime, is allowed to be trained from 17:00 to 9:00, or the like.

The following uses an example in which the first MnF is a management data analytic MnF and the first ML model is a coverage problem analysis ML model to describe a process in which the second device sends the control information to the first device based on the capability information. Specifically, when the capability information indicates that the management data analytic MnF supports ML, the second device may determine, based on a training requirement for the management data analytic MnF and the capability information, the content indicated by the control information. For example, when the training requirement is to implement the management data analytic MnF by using AI and the capability information further indicates that the management data analytic MnF supports online training of the coverage problem analysis ML model, the control information indicates that the coverage problem analysis ML model is allowed to be trained, for example, is allowed to be trained online. When the training requirement is to implement the management data analytic MnF not by using AI, the control information indicates that training of the coverage problem analysis ML model is not allowed. For another example, when the capability information indicates one or more frequencies of ML model training supported by the management data analytic MnF (where the one or more frequencies specifically include training the ML model once a day and training the ML model twice a day), the second device may determine one frequency from the one or more frequencies as a frequency indicated by the control information. For example, the frequency that is indicated by the control information at which the coverage problem analysis ML model is allowed to be trained is once a day.

In a possible implementation, step 302 may include: The second device sends the control information to the first device based on the capability information through the interface corresponding to the first MnF. When the first device is a network element device and the second device is an operator network management device, the second device may send, based on the capability information, the control information to the equipment vendor network management device through the interface between the equipment vendor network management device managing the first device and the second device, and the equipment vendor network management device sends the control information to the first device through the interface between the equipment vendor network management device and the first device.

Optionally, the method further includes: The second device sends management status information of the first MnF to the first device through the interface corresponding to the first MnF. It may also be understood that the control information and the management status information of the first MnF are simultaneously sent by the second device to the first device through the interface corresponding to the first MnF. The management status information of the first MnF indicates to enable or disable the first MnF. This indicates that the control information may be transmitted to the first device through the interface used for sending the management status information of the first MnF. This avoids a conflict caused by separately managing and controlling a same MnF through two interfaces.

303: The first device trains the first ML model based on the control information.

For example, when the control information indicates that the first ML model is allowed to be trained, the first device trains the first ML model. In other words, the first device enables training of the first ML model. On the contrary, when the control information indicates that training of the first ML model is not allowed, the first device disables training of the first ML model.

When the control information indicates that the first ML model is allowed to be trained and the control information further indicates the frequency at which the first ML model is allowed to be trained, the first device may further train the first ML model based on the frequency. If the frequency is daily, the first device may train the first ML model once every 24 hours.

When the control information indicates that the first ML model is allowed to be trained and the control information further indicates one or more of the time period in which the first ML model is allowed to be trained, the time period in which the first ML model is prohibited from being trained, and the like, the first device may further train the first ML model in a corresponding time period.

When the control information indicates that the first ML model is allowed to be trained, the control information indicates the frequency at which the first ML model is allowed to be trained, and the control information further indicates one or more of the time period in which the first ML model is allowed to be trained, the time period in which the first ML model is prohibited from being trained, and the like, the first device may train the first ML model in a corresponding time period based on the frequency.

The following uses an example in which the first MnF is a management data analytic MnF and the first ML model is a coverage problem analysis ML model to describe a process in which the first device trains the coverage problem analysis ML model based on the control information. Details are as follows.

When the control information indicates that the coverage problem analysis ML model is allowed to be trained, the first device trains the coverage problem analysis ML model. In other words, the first device enables training of the coverage problem analysis ML model. On the contrary, when the control information indicates that training of the coverage problem analysis ML model is not allowed, the first device disables training of the coverage problem analysis ML model.

When the control information indicates that the coverage problem analysis ML model is allowed to be trained and the control information further indicates that a frequency at which the coverage problem analysis ML model is allowed to be trained is once a day, the first device may further train the coverage problem analysis ML model once a day.

When the control information indicates that the coverage problem analysis ML model is allowed to be trained and the control information further indicates one or more of the following, the first device may further train the coverage problem analysis ML model in a corresponding time period: A time period in which the coverage problem analysis ML model is allowed to be trained is from 17:00 to 9:00, a time period in which the coverage problem analysis ML model is prohibited from being trained is from 10:00 to 16:00, and the like. For example, when the control information indicates that the time period in which the coverage problem analysis ML model is allowed to be trained is from 17:00 to 9:00, the first device may perform training from 17:00 to 9:00. When the control information indicates that the time period in which the coverage problem analysis ML model is prohibited from being trained is from 10:00 to 16:00, the first device cannot perform training from 10:00 to 16:00, and specific training time may be determined by the first device. When the control information not only indicates that the time period in which the data analysis model is allowed to be trained is from 17:00 to 9:00, but also indicates that the time period in which the coverage problem analysis ML model is prohibited from being trained is from 10:00 to 16:00, the first device may perform training from 17:00 to 9:00, but cannot perform training from 10:00 to 16:00.

When the control information indicates that the coverage problem analysis ML model is allowed to be trained, the control information indicates that the frequency at which the coverage problem analysis ML model is allowed to be trained is once a day, and the control information further indicates one or more of the following, the first device may train the coverage problem analysis ML model in a corresponding time period based on the frequency: The time period in which the coverage problem analysis ML model is allowed to be trained is from 17:00 to 9:00, the time period in which the coverage problem analysis ML model is prohibited from being trained is from 10:00 to 16:00, and the like. For example, when the control information indicates that the frequency at which the coverage problem analysis ML model is allowed to be trained is once a day and the time period in which the coverage problem analysis ML model is allowed to be trained is from 17:00 to 9:00, the first device may train the coverage problem analysis ML model once every day from 17:00 to 9:00. When the control information indicates that the frequency at which the coverage problem analysis ML model is allowed to be trained is once a day and the time period in which the coverage problem analysis ML model is prohibited from being trained is from 10:00 to 16:00, the first device cannot perform training from 10:00 to 16:00 every day. Specific training time may be determined by the first device, but the first device needs to train the coverage problem analysis ML model once within the determined training time. When the control information not only indicates that the time period in which the data analysis model is allowed to be trained is from 17:00 to 9:00, but also indicates that the time period in which the coverage problem analysis ML model is prohibited from being trained is from 10:00 to 16:00, the first device may train the coverage problem analysis ML model once every day from 17:00 to 9:00, but cannot train the coverage problem analysis ML model from 10:00 to 16:00 every day.

In the foregoing embodiment, content exchanged between the first device and the second device is the control information associated with the capability information, so that the first device can autonomously train the first ML model based on the control information, and can autonomously determine whether actual application effect of the first ML model meets current network or service performance, thereby quickly ensuring network and service performance. In addition, the control information configured by the second device can further meet the capability of the first device. This avoids the problem that ML model training fails due to that the control information is outside the capability range of the first device, and consequently network and service performance cannot be ensured in a timely manner.

In a possible implementation, the method further includes: The first device sends running information of the first ML model to the second device. For example, the first device sends the running information of the first ML model to the second device through the interface corresponding to the first MnF. When the first device is a network element device and the second device is an operator network management device, the second device may send the running information of the first ML model to the equipment vendor network management device through the interface between the equipment vendor network management device managing the first device and the second device, and the equipment vendor network management device sends the running information of the first ML model to the first device through the interface between the equipment vendor network management device and the first device. In this way, the second device can learn of the running information of the first ML model, so that the first ML model can be better managed. For example, the control information can be adjusted.

The running information of the first ML model includes at least one of the following: version information of the first ML model, training status information of the first ML model, a quantity of historical training times of the first ML model, latest training time of the first ML model, or a historical training record of the first ML model. The version information of the first ML model may be a version number and/or version time of the first ML model. The training status information of the first ML model may include training started, training in progress, or training completed. The quantity of historical training times of the first ML model may include a quantity of successful training times and/or a quantity of failed training times. The historical training record of the first ML model may include at least one of the following: start time of historical training of the first ML model, end time of historical training of the first ML model, or a historical training result (including failed or successful training) of the first ML model.

Optionally, the method further includes: The first device sends running information of the first MnF to the second device through the interface corresponding to the first MnF. It may also be understood that the running information of the first ML model and the running information of the first MnF are simultaneously sent by the first device to the second device through the interface corresponding to the first MnF. This indicates that the running information of the first ML model may be transmitted to the second device through the interface used for sending the running information of the first MnF. This avoids a conflict caused by separately managing and controlling a same MnF through two interfaces.

The running information of the first MnF may include: Running of the first MnF is started, running of the first MnF is in progress, the first MnF is suspended, or the like.

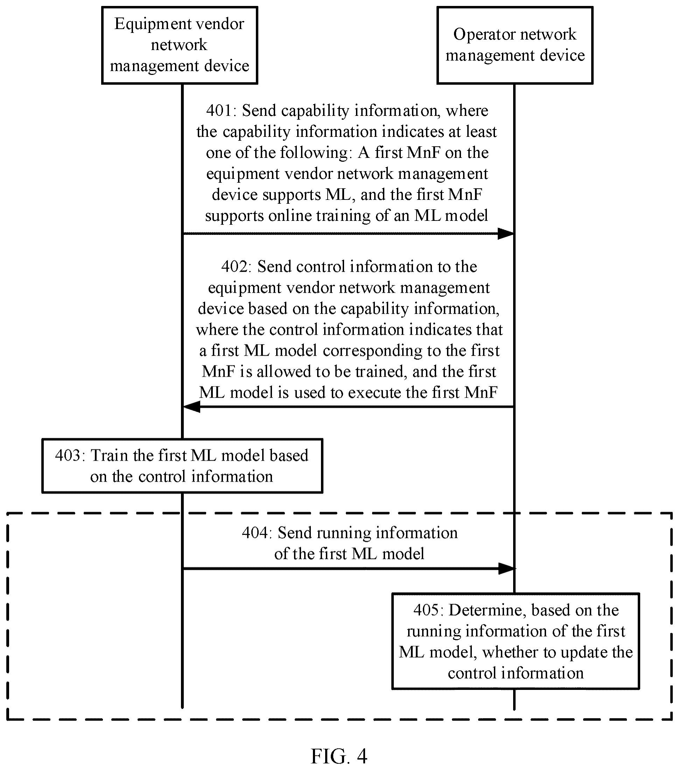

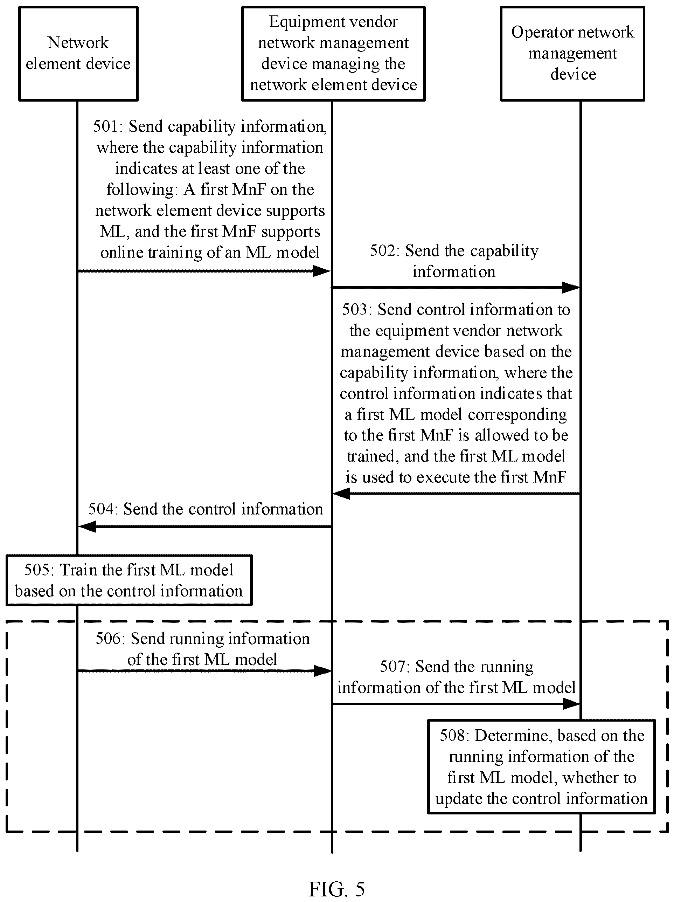

The foregoing method embodiment shown in FIG. 3 includes many possible implementation solutions. The following illustrates some of the implementation solutions with reference to FIG. 4 or FIG. 5. It should be noted that, for related concepts, operations, or logical relationships that are not explained in FIG. 4 or FIG. 5, refer to the corresponding description in the embodiment shown in FIG. 3. Therefore, details are not described again.

FIG. 4 is a schematic flowchart of another communication method according to an embodiment of this application. In FIG. 4, an example in which a first device is an equipment vendor network management device, and a second device is an operator network management device is used for description. The method includes but is not limited to the following steps.

401: The equipment vendor network management device sends capability information to the operator network management device through an interface corresponding to a first MnF, where the capability information indicates at least one of the following: The first MnF on the equipment vendor network management device supports ML, or the first MnF supports online training of an ML model.

Correspondingly, the operator network management device receives the capability information from the equipment vendor network management device through the interface corresponding to the first MnF.

Step 401 is similar to step 301 in FIG. 3, and details are not described herein again.

Optionally, the method further includes: The equipment vendor network management device sends at least one of the following to the operator network management device through the interface corresponding to the first MnF: an identifier of the first MnF, an identifier of the equipment vendor network management device, or the like. It may also be understood that the capability information and the at least one of the following are simultaneously sent by the equipment vendor network management device to the operator network management device: the identifier of the first MnF or the identifier of the equipment vendor network management device.

The identifier of the first MnF may be a unique identifier name. The identifier of the equipment vendor network management device may be a unique identifier name.

In a possible implementation, before step 401, the method may further include: The equipment vendor network management device receives a first query request from the operator network management device through the interface corresponding to the first MnF. The first query request includes the identifier of the first MnF, and the first query request is used to request the capability information. For example, the first query request is used to request the equipment vendor network management device to obtain the capability information based on interface model information (information model) of the first MnF. It should be noted that, in this application, the interface model information may describe interaction information between two systems. isReadable=True (that is, "isReadable" is yes) indicates that an interface invoker can read the parameter, isReadable=False (that is, "isReadable" is no) indicates that the interface invoker cannot read the parameter, isWritable=True (that is, "isWritable" is yes) indicates that the interface invoker can specify a value of the parameter, and isWritable=False (that is, "isWritable" is no) indicates that the interface invoker cannot specify a value of this parameter. For the interface model information of the first MnF, refer to Table 1. As shown in Table 1, the interface model information of the first MnF may include one or more of the following: an MnF Id (MnF Id) field, an MnF Type (MnF Type) field, an isAIEnabled (isAIEnabled) field, an isTrainingSupported (isTrainingSupported) field, a supportedTrainingFrequency (supportedTrainingFrequency) field, and the like. MnF Id indicates an identifier of the first MnF, MnF Type indicates a type of the first MnF, isAIEnabled indicates that the first MnF supports ML, isTrainingSupported indicates that the first MnF supports online training of an ML model, and supportedTrainingFrequency indicates a frequency of ML model training supported by the first MnF.

**Table 1**

| Attribute | isReadable | is Writable |
|---|---|---|
| MnF Id | Yes | No |
| MnF Type | Yes | No |
| isAIEnabled | Yes | No |
| isTrainingSupported | Yes | No |
| supportedTrainingFrequency | Yes | No |

402: The operator network management device sends control information to the equipment vendor network management device based on the capability information through the interface corresponding to the first MnF, where the control information indicates that a first ML model corresponding to the first MnF is allowed to be trained, and the first ML model is used to execute the first MnF.

Correspondingly, the equipment vendor network management device receives the control information from the operator network management device through the interface corresponding to the first MnF.

Step 402 is similar to step 302 in FIG. 3, and details are not described herein again.

In a possible implementation, the method further includes: The operator network management device sends the identifier of the first MnF to the equipment vendor network management device through the interface corresponding to the first MnF. It may also be understood that the control information and the identifier of the first MnF are simultaneously sent by the operator network management device to the equipment vendor network management device, or the control information and the identifier of the first MnF are sent by the operator network management device to the equipment vendor network management device a plurality of times.

Optionally, the method further includes: The operator network management device sends a first configuration request to the equipment vendor network management device through the interface corresponding to the first MnF. The first configuration request is used to request the equipment vendor network management device to configure, in the interface model information of the first MnF, a field corresponding to the control information. As shown in Table 2, the equipment vendor network management device may configure one or more of the following in the interface model information of the first MnF: an isTrainingAllowed (isTrainingAllowed) field, a configuredTrainingFrequency (configuredTrainingFrequency) field, an allowedTrainingTime (allowedTrainingTime) field, a prohibitedTrainingTime (prohibitedTrainingTime) field, and the like. The isTrainingAllowed field indicates that the first ML model is allowed to be trained, the configuredTrainingFrequency field indicates a frequency at which the first ML model is allowed to be trained, the allowedTrainingTime field indicates a time period in which the first ML model is allowed to be trained, and the prohibitedTrainingTime field indicates a time period in which the first ML model is prohibited from being trained.

**Table 2**

| Attribute | isReadable | isWritable |
|---|---|---|
| MnF Id | Yes | No |
| MnF Type | Yes | No |
| isAlEnabled | Yes | No |
| isTrainingSupported | Yes | No |
| supportedTrainingFrequency | Yes | No |
| isTrainingAllowed | Yes | Yes |
| configuredTrainingFrequency | Yes | Yes |
| allowedTrainingTime | Yes | Yes |
| prohibited Training Time | Yes | Yes |

403: The equipment vendor network management device trains the first ML model based on the control information.

Step 403 is similar to step 303 in FIG. 3, and details are not described herein again.

Optionally, the method may further include step 404.

404: The equipment vendor network management device sends running information of the first ML model to the operator network management device through the interface corresponding to the first MnF.

Correspondingly, the operator network management device receives the running information of the first ML model from the equipment vendor network management device through the interface corresponding to the first MnF.

Optionally, the running information of the first ML model may be carried in an information update notification message. For the running information of the first ML model, refer to the related description of step 303 in FIG. 3. Details are not described herein again.

In a possible implementation, the control information may further indicate the equipment vendor network management device to send the running information of the first ML model to the operator network management device. In another possible implementation, the method may further include: The equipment vendor network management device receives a second query request or a first subscription request from the operator network management device through the interface corresponding to the first MnF. The second query request or the first subscription request is used to request the equipment vendor network management device to send the running information of the first ML model to the operator network management device. For example, the operator network management device may notify, according to a monitoring requirement, the equipment vendor network management device to report the running information of the first ML model to the operator network management device. The monitoring requirement may include one or more of the following: a trust status of the first MnF, a concern of an operation and maintenance person for the first ML model, network or service performance, and the like.

Optionally, the method further includes: The equipment vendor network management device configures an AIReportControl (AIReportControl) field in the interface model information of the first MnF. The AIReportControl field indicates that the equipment vendor network management device sends the running information of the first ML model to the operator network management device. For details, refer to Table 3.

Optionally, the method further includes: The equipment vendor network management device sends the identifier of the first MnF to the operator network management device through the interface corresponding to the first MnF. It may also be understood that the identifier of the first MnF and the running information of the first ML model are simultaneously sent by the equipment vendor network management device to the operator network management device.

In a possible implementation, the method further includes: The equipment vendor network management device configures, in the interface model information of the first MnF, a field corresponding to the running information of the first ML model. As shown in Table 3, the equipment vendor network management device may configure one or more of the following in the interface model information of the first MnF: an MLModelVersion (MLModelVersion) field, an MLTrainingState (MLTrainingState) field, a NumberOfTrainingRecord (NumberOfTrainingRecord) field, a lastTrainingTime (lastTrainingTime) field, a historicalTrainingRecordList (historicalTrainingRecordList) field, and the like. The MLModelVersion field indicates version information of the first ML model, the MLTrainingState field indicates training status information of the first ML model, the NumberOfTrainingRecord field indicates a quantity of historical training times of the first ML model, the lastTrainingTime field indicates latest training time of the first ML model, and the historicalTrainingRecordList field indicates a historical training record of the first ML model. Therefore, the operator network management device may obtain the running information of the first ML model by querying the interface model information of the first MnF. For example, the operator network management device obtains the running information of the first ML model by querying one or more of the following: the MLModelVersion field, the MLTrainingState field, the NumberOfTrainingRecord field, the lastTrainingTime field, the historicalTrainingRecordList field, and the like.

**Table 3**

| Attribute | isReadable | is Writable |
|---|---|---|
| MnF Id | Yes | No |
| MnF Type | Yes | No |
| isAlEnabled | Yes | No |
| isTrainingSupported | Yes | No |
| supportedTrainingFrequency | Yes | No |
| isTrainingAllowed | Yes | Yes |
| configured TrainingFrequency | Yes | Yes |
| AIReportControl | Yes | Yes |
| allowedTrainingTime | Yes | Yes |
| prohibitedTrainingTime | Yes | Yes |
| MLModelVersion | Yes | No |
| MLTrainingState | Yes | No |
| NumberOfTrainingRecord | Yes | No |
| lastTrainingTime | Yes | No |
| historicalTrainingRecordList | Yes | No |

Optionally, the method may further include step 405.

405: The operator network management device determines, based on the running information of the first ML model, whether to update the control information.

For example, the operator network management device determines whether to update the frequency at which the first ML model is allowed to be trained. For another example, the operator network management device determines whether to update the first ML model being allowed to be trained online to the first ML model not being allowed to be trained online.

Optionally, when the operator network management device determines, based on the running information of the first ML model, to update the control information, the operator network management device may further send the updated control information to the equipment vendor network management device, for example, send the updated control information to the equipment vendor network management device through the interface corresponding to the first MnF.

In the foregoing embodiment, content exchanged between the equipment vendor network management device and the operator network management device is the control information associated with the capability information, so that the equipment vendor network management device can autonomously train the first ML model based on the control information, and can autonomously determine whether actual application effect of the first ML model meets current network or service performance, thereby quickly ensuring network and service performance. In addition, the control information configured by the operator network management device can further meet the capability of the equipment vendor network management device. This avoids the problem that ML model training fails due to that the control information is outside the capability range of the equipment vendor network management device, and consequently network and service performance cannot be ensured in a timely manner. In addition, the operator network management device can further learn of the running information of the first ML model, so that the first ML model can be better managed.

FIG. 5 is a schematic flowchart of another communication method according to an embodiment of this application. In FIG. 5, an example in which a first device is a network element device, and a second device is an operator network management device is used for description. The method includes but is not limited to the following steps.

501: The network element device sends capability information to an equipment vendor network management device managing the network element device. For example, the network element device sends the capability information to the equipment vendor network management device through an interface between the network element device and the equipment vendor network management device.

Correspondingly, the equipment vendor network management device receives the capability information from the network element device. For example, the equipment vendor network management device receives the capability information from the network element device through the interface between the network element device and the equipment vendor network management device.

For the capability information, refer to the related description of step 301 in FIG. 3. Details are not described herein again.

In a possible implementation, the method may further include: The network element device sends at least one of the following to the equipment vendor network management device: an identifier of a first MnF or an identifier of the network element device. It may also be understood that the capability information and the at least one of the following are simultaneously sent by the network element device to the equipment vendor network management device: the identifier of the first MnF or the identifier of the network element device.

The identifier of the first MnF may be a unique identifier name. The identifier of the network element device may be a unique identifier name. A type of the first MnF may be an automatic neighbor relation MnF, a mobility load balancing MnF, a mobility robustness optimization MnF, a physical cell identifier optimization MnF, a random access channel optimization MnF, or a traffic steering MnF. An identifier of the equipment vendor network management device managing the network element device may be a unique identifier name.

502: The equipment vendor network management device sends the capability information to the operator network management device. For example, the equipment vendor network management device sends the capability information to the operator network management device through an interface between the equipment vendor network management device and the operator network management device.

Correspondingly, the operator network management device receives the capability information from the equipment vendor network management device. For example, the operator network management device receives the capability information from the equipment vendor network management device through the interface between the equipment vendor network management device and the operator network management device.

In a possible implementation, before step 502, the method may further include: The equipment vendor network management device receives a third query request from the operator network management device through the interface between the equipment vendor network management device and the operator network management device. The third query request includes the identifier of the first MnF and the identifier of the network element device, and the third query request is used to request the capability information. For example, the third query request is used to request the equipment vendor network management device to obtain the capability information based on interface model information of the first MnF. As shown in Table 4, the interface model information of the first MnF may include one or more of the following: an ME Id (ME Id) field, an MnF Id field, an MnF Type field, an isAlEnabled field, an isTrainingSupported field, a supportedTrainingFrequency field, and the like. The ME Id field indicates an identifier of the network element device. For other fields, refer to the description in Table 1. Details are not described herein again.

**Table 4**

| Attribute | isReadable | is Writable |
|---|---|---|
| ME Id | Yes | No |
| MnF Id | Yes | No |
| MnF Type | Yes | No |
| isAIEnabled | Yes | No |
| isTrainingSupported | Yes | No |
| supportedTrainingFrequency | Yes | No |

In a possible implementation, the method may further include: The equipment vendor network management device sends at least one of the following to the operator network management device through the interface between the equipment vendor network management device and the operator network management device: the identifier of the first MnF, the identifier of the network element device, the type of the first MnF, the identifier of the equipment vendor network management device, or the like. It may also be understood that the capability information and the at least one of the following are simultaneously sent by the equipment vendor network management device to the operator network management device: the identifier of the first MnF, the identifier of the network element device, the type of the first MnF, or the identifier of the equipment vendor network management device.

503: The operator network management device sends control information to the equipment vendor network management device based on the capability information. For example, the operator network management device sends the control information to the equipment vendor network management device through the interface between the equipment vendor network management device and the operator network management device.

Correspondingly, the equipment vendor network management device receives the control information from the operator network management device. For example, the equipment vendor network management device receives the control information from the operator network management device through the interface between the equipment vendor network management device and the operator network management device.

For the control information, refer to the related description of step 302 in FIG. 3. Details are not described herein again.

In a possible implementation, the method further includes: The operator network management device sends the identifier of the first MnF to the equipment vendor network management device. For example, the operator network management device sends the identifier of the first MnF to the equipment vendor network management device through the interface between the equipment vendor network management device and the operator network management device. It may also be understood that the control information and the identifier of the first MnF are simultaneously sent by the operator network management device to the equipment vendor network management device.

Optionally, the method further includes: The operator network management device sends the identifier of the network element device to the equipment vendor network management device. For example, the operator network management device sends the identifier of the network element device to the equipment vendor network management device through the interface between the equipment vendor network management device and the operator network management device. It may also be understood that the control information, the identifier of the first MnF, and the identifier of the network element device are simultaneously sent by the operator network management device to the equipment vendor network management device.

In a possible implementation, the method further includes: The operator network management device sends a second configuration request to the equipment vendor network management device. The second configuration request is used to request the equipment vendor network management device to configure, in the interface model information of the first MnF, a field corresponding to the control information. As shown in Table 5, the equipment vendor network management device may configure one or more of the following in the interface model information of the first MnF: an isTrainingAllowed field, a configuredTrainingFrequency field, an allowedTrainingTime field, a prohibitedTrainingTime field, and the like. For the isTrainingAllowed field, the configuredTrainingFrequency field, the allowedTrainingTime field, and the prohibitedTrainingTime field, refer to the related descriptions in Table 2. Details are not described herein again.

**Table 5**

| Attribute | isReadable | isWritable |
|---|---|---|
| ME Id | Yes | No |
| MnF Id | Yes | No |
| MnF Type | Yes | No |
| isAlEnabled | Yes | No |
| isTrainingSupported | Yes | No |
| supportedTrainingFrequency | Yes | No |
| isTrainingAllowed | Yes | Yes |
| configured TrainingFrequency | Yes | Yes |
| AIReportControl | Yes | Yes |
| allowedTrainingTime | Yes | Yes |
| prohibitedTrainingTime | Yes | Yes |

504: The equipment vendor network management device sends the control information to the network element device. For example, the equipment vendor network management device sends the control information to the network element device through the interface between the equipment vendor network management device and the network element device.

Correspondingly, the network element device receives the control information from the equipment vendor network management device. For example, the network element device receives the control information from the equipment vendor network management device through the interface between the equipment vendor network management device and the network element device.

505: The network element device trains a first ML model based on the control information.

Step 505 is similar to step 303 in FIG. 3, and details are not described herein again.

Optionally, the method may further include step 506.

506: The network element device sends running information of the first ML model to the equipment vendor network management device. For example, the network element device sends the running information of the first ML model to the equipment vendor network management device through the interface between the network element device and the equipment vendor network management device.

Correspondingly, the equipment vendor network management device receives the running information from the first ML model. For example, the equipment vendor network management device receives the running information from the first ML model through the interface between the network element device and the equipment vendor network management device.

For the running information of the first ML model, refer to the related description of step 303 in FIG. 3. Details are not described herein again.

In a possible implementation, the control information may further indicate the network element device to send the running information of the first ML model to the operator network management device. In another possible implementation, the method may further include: The network element device receives a fourth query request or a second subscription request from the operator network management device. For example, the network element device receives the fourth query request or the second subscription request from the equipment vendor network management device through the interface between the network element device and the equipment vendor network management device, and the equipment vendor network management device receives the fourth query request or the second subscription request from the operator network management device through the interface between the equipment vendor network management device and the operator network management device. The fourth query request or the second subscription request is used to request the network element device to send the running information of the first ML model to the operator network management device. For example, the operator network management device may notify, according to a monitoring requirement, the network element device to report the running information of the first ML model to the operator network management device. The monitoring requirement may include one or more of the following: a trust status of the first MnF, a concern of an operation and maintenance person for the first ML model, network or service performance, and the like.

Optionally, when the equipment vendor network management device obtains the running information of the first ML model, the equipment vendor network management device may further configure an AIReportControl (AIReportControl) field in the interface model information of the first MnF. The AIReportControl field indicates that the equipment vendor network management device sends the running information of the first ML model to the operator network management device. For details, refer to Table 6.

Optionally, the method further includes: The network element device sends the identifier of the first MnF to the equipment vendor network management device. For example, the network element device sends the identifier of the first MnF to the equipment vendor network management device through the interface between the network element device and the equipment vendor network management device. It may also be understood that the identifier of the first MnF and the running information of the first ML model are simultaneously sent by the network element device to the equipment vendor network management device.

In a possible implementation, the method further includes: The equipment vendor network management device configures, in the interface model information of the first MnF, a field corresponding to the running information of the first ML model. As shown in Table 6, the equipment vendor network management device may configure one or more of the following in the interface model information of the first MnF: an MLModelVersion field, an MLTrainingState field, a NumberOfTrainingRecord field, a lastTrainingTime field, a historicalTrainingRecordList field, and the like. For the MLModelVersion field, the MLTrainingState field, the NumberOfTrainingRecord field, the lastTrainingTime field, the historicalTrainingRecordList field, and the like, refer to the related descriptions in Table 3. Details are not described herein again. Therefore, the operator network management device may obtain the running information of the first ML model by querying the interface model information of the first MnF. For example, the operator network management device obtains the running information of the first ML model by querying one or more of the following: the MLModelVersion field, the MLTrainingState field, the NumberOfTrainingRecord field, the lastTrainingTime field, the historicalTrainingRecordList field, and the like.

**Table 6**

| Attribute | isReadable | isWritable |
|---|---|---|
| ME Id | Yes | No |
| MnF Id | Yes | No |
| MnF Type | Yes | No |
| isAIEnabled | Yes | No |
| isTrainingSupported | Yes | No |

| Attribute | isReadable | is Writable |
|---|---|---|
| supportedTrainingFrequency | Yes | No |
| isTrainingAllowed | Yes | Yes |
| configured TrainingFrequency | Yes | Yes |
| AIReportControl | Yes | Yes |
| allowedTrainingTime | Yes | Yes |
| prohibitedTrainingTime | Yes | Yes |
| MLModelVersion | Yes | No |
| MLTrainingState | Yes | No |
| NumberOfTrainingRecord | Yes | No |
| lastTrainingTime | Yes | No |
| historicalTrainingRecordList | Yes | No |

507: The equipment vendor network management device sends the running information of the first ML model to the operator network management device. For example, the equipment vendor network management device sends the running information of the first ML model to the operator network management device through the interface between the equipment vendor network management device and the operator network management device.

Correspondingly, the operator network management device receives the running information of the first ML model from the equipment vendor network management device. For example, the operator network management device receives the running information of the first ML model from the equipment vendor network management device through the interface between the equipment vendor network management device and the operator network management device.

Optionally, the running information of the first ML model may be carried in an information update notification message.

Optionally, the method further includes: The equipment vendor network management device sends the identifier of the first MnF to the operator network management device. For example, the equipment vendor network management device sends the identifier of the first MnF to the operator network management device through the interface between the equipment vendor network management device and the operator network management device. It may also be understood that the identifier of the first MnF and the running information of the first ML model are simultaneously sent by the equipment vendor network management device to the operator network management device.

Optionally, the method further includes: The equipment vendor network management device sends the identifier of the network element device to the operator network management device. For example, the equipment vendor network management device sends the identifier of the network element device to the operator network management device through the interface between the equipment vendor network management device and the operator network management device. It may also be understood that the identifier of the first MnF, the running information of the first ML model, and the identifier of the network element device are simultaneously sent by the equipment vendor network management device to the operator network management device.

Optionally, the method may further include step 508.

508: The operator network management device determines, based on the running information of the first ML model, whether to update the control information.

Step 508 is similar to step 405 in FIG. 4, and details are not described herein again.

In the foregoing embodiment, content exchanged between the network element device and the operator network management device is the control information associated with the capability information, so that the network element device can autonomously train the first ML model based on the control information, and can autonomously determine whether actual application effect of the first ML model meets current network or service performance, thereby quickly ensuring network and service performance. In addition, the control information configured by the operator network management device can further meet the capability of the network element device. This avoids the problem that ML model training fails due to that the control information is outside the capability range of the network element device, and consequently network and service performance cannot be ensured in a timely manner. In addition, the operator network management device can further learn of the running information of the first ML model, so that the first ML model can be better managed.

The foregoing mainly describes the solutions provided in this application from a perspective of interaction between devices. It may be understood that, in the foregoing implementations, to implement the foregoing functions, each device includes a corresponding hardware structure and/or software module for performing each function. A person skilled in the art should be easily aware that, in combination with units and algorithm steps of the examples described in embodiments disclosed in this specification, this application may be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first device or the second device may be divided into functional modules based on the foregoing method examples. For example, each functional module may be obtained through division based on a corresponding function, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

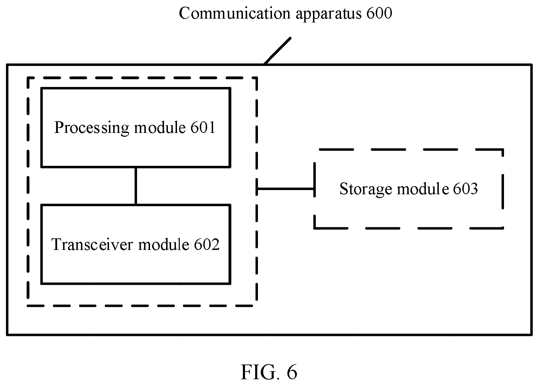

FIG. 6 is a diagram of a structure of a communication apparatus according to an embodiment of this application. The communication apparatus 600 may be used in the method in any one of the embodiments shown in FIG. 3 to FIG. 5. As shown in FIG. 6, the communication apparatus 600 includes a processing module 601 and a transceiver module 602. The processing module 601 may be one or more processors, and the transceiver module 602 may be a transceiver or a communication interface. The communication apparatus may be configured to implement a function of the first device or the second device in any one of the foregoing method embodiments, or configured to implement a function of the network element in any one of the foregoing method embodiments. The network element or network function may be a network component in a hardware device, a software function running on dedicated hardware, or a virtualization function instantiated on a platform (for example, a cloud platform). Optionally, the communication apparatus 600 may further include a storage module 603, configured to store program code and data that are of the communication apparatus 600.

In an example, the communication apparatus is used as the first device or a chip used in the first device, and performs steps performed by the first device in the foregoing method embodiments. The transceiver module 602 is configured to support communication with the second device and the like. The transceiver module specifically performs a sending and/or receiving action performed by the first device in any one of the embodiments shown in FIG. 3 to FIG. 5, for example, support the first device in performing another process of the technology described in this specification. The processing module 601 may be configured to support the communication apparatus 600 in performing a processing action in the foregoing method embodiments, for example, support the first device in performing step 303, and/or another process of the technology described in this specification.

Specifically, the transceiver module 602 is configured to send capability information to the second device. The capability information indicates at least one of the following: A first management function MnF on the first device supports machine learning ML, or the first MnF supports online training of an ML model. The transceiver module 602 is configured to receive control information from the second device. The control information indicates that a first ML model corresponding to the first MnF is allowed to be trained, the first ML model is used to execute the first MnF, and the control information is associated with the capability information. The processing module 601 is configured to train the first ML model based on the control information.

Optionally, the control information further indicates at least one of the following: a frequency at which the first ML model is allowed to be trained, a time period in which the first ML model is allowed to be trained, or a time period in which the first ML model is prohibited from being trained.

Optionally, the capability information further indicates a frequency of ML model training supported by the first MnF.

Optionally, the transceiver module 602 is further configured to send running information of the first ML model to the second device. The running information of the first ML model includes at least one of the following: version information of the first ML model, training status information of the first ML model, a quantity of historical training times of the first ML model, latest training time of the first ML model, or a historical training record of the first ML model.

Optionally, the control information further indicates the first device to send the running information of the first ML model to the second device.

Optionally, the first MnF includes any one of the following: a management data analytic MnF, an energy saving MnF, a coverage and capacity optimization MnF, an intent handling MnF, and a network slice subnet MnF; or the first MnF includes any one of the following: an automatic neighbor relation MnF, a mobility load balancing MnF, a mobility robustness optimization MnF, a physical cell identifier optimization MnF, a random access channel optimization MnF, and a traffic steering MnF.

Optionally, when the first device is an equipment vendor network management device and the second device is an operator network management device, the first MnF includes any one of the following: the management data analytic MnF, the energy saving MnF, the coverage and capacity optimization MnF, the intent handling MnF, and the network slice subnet MnF; or when the first device is a network element device and the second device is an operator network management device, the first MnF includes any one of the following: the automatic neighbor relation MnF, the mobility load balancing MnF, the mobility robustness optimization MnF, the physical cell identifier optimization MnF, the random access channel optimization MnF, and the traffic steering MnF.

Optionally, when sending the capability information to the second device, the transceiver module 602 is configured to send the capability information to the second device through an interface corresponding to the first MnF; and the transceiver module 602 is further configured to send a type of the first MnF to the second device through the interface corresponding to the first MnF.

Optionally, when receiving the control information from the second device, the transceiver module 602 is configured to receive the control information from the second device through an interface corresponding to the first MnF; and the transceiver module 602 is further configured to receive management status information of the first MnF from the second device through the interface corresponding to the first MnF.

Optionally, when sending the running information of the first ML model to the second device, the transceiver module 602 is configured to send the running information of the first ML model to the second device through an interface corresponding to the first MnF; and the transceiver module 602 is further configured to send running information of the first MnF to the second device through the interface corresponding to the first MnF.

In another example, the communication apparatus is used as the second device or a chip used in the second device, and performs steps performed by the second device in the foregoing method embodiments. The transceiver module 602 is configured to support communication with the first device and the like. The transceiver module specifically performs a sending and/or receiving action performed by the second device in any one of the embodiments shown in FIG. 3 to FIG. 5, for example, support the second device in performing another process of the technology described in this specification. The processing module 601 may be configured to support the communication apparatus 600 in performing a processing action in the foregoing method embodiments, and/or another process of the technology described in this specification.

Specifically, the transceiver module 602 is configured to receive capability information from the first device. The capability information indicates at least one of the following: A first management function MnF on the first device supports machine learning ML, or the first MnF supports online training of an ML model. The transceiver module 602 is further configured to send control information to the first device based on the capability information. The control information indicates that a first ML model corresponding to the first MnF is allowed to be trained, and the first ML model is used to execute the first MnF.

Optionally, the control information further indicates at least one of the following: a frequency at which the first ML model is allowed to be trained, a time period in which the first ML model is allowed to be trained, or a time period in which the first ML model is prohibited from being trained.

Optionally, the capability information further indicates a frequency of ML model training supported by the first MnF.

Optionally, the transceiver module 602 is further configured to receive running information of the first ML model from the first device. The running information of the first ML model includes at least one of the following: version information of the first ML model, training status information of the first ML model, a quantity of historical training times of the first ML model, latest training time of the first ML model, or a historical training record of the first ML model.

Optionally, the control information further indicates the first device to send the running information of the first ML model to the second device.

Optionally, the first MnF includes any one of the following: a management data analytic MnF, an energy saving MnF, a coverage and capacity optimization MnF, an intent handling MnF, and a network slice subnet MnF; or the first MnF includes any one of the following: an automatic neighbor relation MnF, a mobility load balancing MnF, a mobility robustness optimization MnF, a physical cell identifier optimization MnF, a random access channel optimization MnF, and a traffic steering MnF.

Optionally, when the first device is an equipment vendor network management device and the second device is an operator network management device, the first MnF includes any one of the following: the management data analytic MnF, the energy saving MnF, the coverage and capacity optimization MnF, the intent handling MnF, and the network slice subnet MnF; or when the first device is a network element device and the second device is an operator network management device, the first MnF includes any one of the following: the automatic neighbor relation MnF, the mobility load balancing MnF, the mobility robustness optimization MnF, the physical cell identifier optimization MnF, the random access channel optimization MnF, and the traffic steering MnF.

Optionally, when receiving the capability information from the second device, the transceiver module 602 is configured to receive the capability information from the first device through an interface corresponding to the first MnF; and the transceiver module 602 is further configured to receive a type of the first MnF from the second device through the interface corresponding to the first MnF.

Optionally, when sending the control information to the first device, the transceiver module 602 is configured to send the control information to the first device through an interface corresponding to the first MnF; and the transceiver module 602 is further configured to send management status information of the first MnF to the first device through the interface corresponding to the first MnF.

Optionally, when receiving the running information of the first ML model from the first device, the transceiver module 602 is configured to receive the running information of the first ML model from the first device through an interface corresponding to the first MnF; and the transceiver module 602 is further configured to receive running information of the first MnF from the first device through the interface corresponding to the first MnF.

In a possible implementation, when the first device or the second device is a chip, the transceiver module 602 may be a communication interface, a pin, a circuit, or the like. The communication interface may be configured to input to-be-processed data to a processor, and may output a processing result of the processor to the outside. During specific implementation, the communication interface may be a general purpose input/output (general purpose input/output, GPIO) interface, and may be connected to a plurality of peripheral devices (for example, a display (LCD), a camera (camera), a radio frequency (radio frequency, RF) module, and an antenna). The communication interface is connected to the processor through a bus.

The processing module 601 may be a processor. The processor may execute computer-executable instructions stored in the storage module, so that the chip performs the method in any one of the embodiments shown in FIG. 3 to FIG. 5.

Further, the processor may include a controller, an arithmetic unit, and a register. For example, the controller is mainly responsible for instruction decoding, and transmitting a control signal for an operation corresponding to the instructions. The arithmetic unit is mainly responsible for performing a fixed-point or floating-point arithmetic operation, a shift operation, a logic operation, and the like, and may also perform an address operation and address translation. The register is mainly responsible for saving a quantity of register operations, intermediate operation results, and the like that are temporarily stored during instruction execution. During specific implementation, a hardware architecture of the processor may be an ASIC architecture, a microprocessor without interlocked piped stages architecture (microprocessor without interlocked piped stages architecture, MIPS), an advanced reduced instruction set computer machines (advanced RISC machines, ARM) architecture, a network processor (network processor, NP) architecture, or the like. The processor may be a single-core or multi-core processor.

The storage module may be a storage module inside the chip, for example, a register or a cache. Alternatively, the storage module may be a storage module outside the chip, for example, a ROM, another type of static storage device that can store static information and instructions, or a RAM.

It should be noted that functions respectively corresponding to the processor and the interface may be implemented by using a hardware design, or may be implemented by using a software design, or may be implemented by using a combination of software and hardware. This is not limited herein.

An embodiment of this application further provides a communication apparatus, including a processor. The processor invokes a computer program stored in a memory to implement any one of the embodiments shown in FIG. 3 to FIG. 5.

An embodiment of this application further provides a communication apparatus, including a processor, a memory, an input interface, and an output interface. The input interface is configured to receive information from another communication apparatus other than the communication apparatus, the output interface is configured to output information to another communication apparatus other than the communication apparatus, and the processor invokes a computer program stored in the memory to implement any one of the embodiments shown in FIG. 3 to FIG. 5.

An embodiment of this application further provides a computer-readable storage medium. The computer-readable storage medium stores a computer program. When the computer program runs, any one of the embodiments shown in FIG. 3 to FIG. 5 is implemented.

An embodiment of this application further provides a chip. The chip includes at least one processor and an interface. The processor is configured to read and execute instructions stored in a memory. When the instructions are run, the chip is enabled to perform any one of the embodiments shown in FIG. 3 to FIG. 5.

An embodiment of this application further provides a computer program product including instructions. When the instructions are executed on a computer, any one of the embodiments shown in FIG. 3 to FIG. 5 is performed.

The foregoing units described as separate parts may or may not be physically separate, and parts displayed as units may or may not be physical units, may be located in one position, or may be distributed on a plurality of network units. Some or all of the units may be selected based on an actual requirement, to achieve the objectives of the solutions in embodiments of this application. In addition, network element units in embodiments of this application may be integrated into one processing unit, or each of the units may exist alone physically, or two or more units are integrated into one unit. The integrated unit may be implemented in a form of hardware, or may be implemented in a form of a software network element unit.

When the integrated unit is implemented in the form of the software network element unit and sold or used as an independent product, the integrated unit may be stored in a computer-readable storage medium. Based on such an understanding, an essentially contributing part in the technical solutions of this application, or all or some of the technical solutions may be embodied in a form of a software product. The computer software product is stored in a storage medium and includes several instructions for instructing a computer device (which may be a personal computer, a terminal device, a cloud server, a network device, or the like) to perform all or some of the steps of the method in embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc. The foregoing descriptions are merely specific implementations of this application, but are not intended to limit the protection scope of this application. Any equivalent modification or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
sending, by a first device, capability information to a second device, wherein the capability information indicates at least one of the following: a first management function MnF on the first device supports machine learning ML, or the first MnF supports online training of an ML model;
receiving, by the first device, control information from the second device, wherein the control information indicates that a first ML model corresponding to the first MnF is allowed to be trained, the first ML model is used to execute the first MnF, and the control information is associated with the capability information; and
training, by the first device, the first ML model based on the control information.

2. The method according to claim 1, wherein the control information further indicates at least one of the following: a frequency at which the first ML model is allowed to be trained, a time period in which the first ML model is allowed is to be trained, or a time period in which the first ML model is prohibited from being trained.

3. The method according to claim 1 or 2, wherein the capability information further indicates a frequency of ML model training supported by the first MnF.

4. The method according to any one of claims 1 to 3, wherein the method further comprises:
sending, by the first device, running information of the first ML model to the second device, wherein the running information of the first ML model comprises at least one of the following: version information of the first ML model, training status information of the first ML model, a quantity of historical training times of the first ML model, latest training time of the first ML model, or a historical training record of the first ML model.

5. The method according to claim 4, wherein the control information further indicates the first device to send the running information of the first ML model to the second device.

6. The method according to any one of claims 1 to 5, wherein the first MnF comprises any one of the following: a management data analytic MnF, an energy saving MnF, a coverage and capacity optimization MnF, an intent handling MnF, or a network slice subnet MnF; or the first MnF comprises any one of the following: an automatic neighbor relation MnF, a mobility load balancing MnF, a mobility robustness optimization MnF, a physical cell identifier optimization MnF, a random access channel optimization MnF, or a traffic steering MnF.

7. The method according to claim 6, wherein when the first device is an equipment vendor network management device and the second device is an operator network management device, the first MnF comprises any one of the following: the management data analytic MnF, the energy saving MnF, the coverage and capacity optimization MnF, the intent handling MnF, or the network slice subnet MnF; or
when the first device is a network element device and the second device is an operator network management device, the first MnF comprises any one of the following: the automatic neighbor relation MnF, the mobility load balancing MnF, the mobility robustness optimization MnF, the physical cell identifier optimization MnF, the random access channel optimization MnF, or the traffic steering MnF.

8. The method according to any one of claims 1 to 7, wherein sending, by the first device, the capability information to the second device comprises:
sending, by the first device, the capability information to the second device through an interface corresponding to the first MnF; and
the method further comprises: sending, by the first device, a type of the first MnF to the second device through the interface corresponding to the first MnF.

9. The method according to any one of claims 1 to 7, wherein receiving, by the first device, the control information from the second device comprises:
receiving, by the first device, the control information from the second device through an interface corresponding to the first MnF; and
the method further comprises: receiving, by the first device, management status information of the first MnF from the second device through the interface corresponding to the first MnF.

10. The method according to claim 4, wherein sending, by the first device, the running information of the first ML model to the second device comprises:
sending, by the first device, the running information of the first ML model to the second device through an interface corresponding to the first MnF; and
the method further comprises: sending, by the first device, running information of the first MnF to the second device through the interface corresponding to the first MnF.

11. A communication method, comprising:
receiving, by a second device, capability information from a first device, wherein the capability information indicates at least one of the following: a first management function MnF on the first device supports machine learning ML, or the first MnF supports online training of an ML model; and
sending, by the second device, control information to the first device based on the capability information, wherein the control information indicates that a first ML model corresponding to the first MnF is allowed to be trained, and the first ML model is used to execute the first MnF.

12. A communication method, comprising:
sending, by a first device, capability information to a second device, wherein the capability information indicates at least one of the following: a first management function MnF on the first device supports machine learning ML, or the first MnF supports online training of an ML model;
sending, by the second device, control information to the first device based on the capability information, wherein the control information indicates that a first ML model corresponding to the first MnF is allowed to be trained, and the first ML model is used to execute the first MnF; and
training, by the first device, the first ML model based on the control information.

13. The method according to claim 12, wherein the control information further indicates at least one of the following: a frequency at which the first ML model is allowed to be trained, a time period in which the first ML model is allowed is to be trained, or a time period in which the first ML model is prohibited from being trained.

14. The method according to claim 12 or 13, wherein the capability information further indicates a frequency of ML model training supported by the first MnF.

15. The method according to any one of claims 12 to 14, wherein the method further comprises:
sending, by the first device, running information of the first ML model to the second device, wherein the running information of the first ML model comprises at least one of the following: version information of the first ML model, training status information of the first ML model, a quantity of historical training times of the first ML model, latest training time of the first ML model, or a historical training record of the first ML model.

16. The method according to claim 15, wherein the control information further indicates the first device to send the running information of the first ML model to the second device.

17. The method according to any one of claims 12 to 16, wherein the first MnF comprises any one of the following: a management data analytic MnF, an energy saving MnF, a coverage and capacity optimization MnF, an intent handling MnF, or a network slice subnet MnF; or the first MnF comprises any one of the following: an automatic neighbor relation MnF, a mobility load balancing MnF, a mobility robustness optimization MnF, a physical cell identifier optimization MnF, a random access channel optimization MnF, or a traffic steering MnF.

18. The method according to claim 17, wherein when the first device is an equipment vendor network management device and the second device is an operator network management device, the first MnF comprises any one of the following: the management data analytic MnF, the energy saving MnF, the coverage and capacity optimization MnF, the intent handling MnF, or the network slice subnet MnF; or when the first device is a network element device and the second device is an operator network management device, the first MnF comprises any one of the following: the automatic neighbor relation MnF, the mobility load balancing MnF, the mobility robustness optimization MnF, the physical cell identifier optimization MnF, the random access channel optimization MnF, or the traffic steering MnF.

19. The method according to any one of claims 12 to 18, wherein sending, by the first device, the capability information to the second device comprises:
sending, by the first device, the capability information to the second device through an interface corresponding to the first MnF; and
the method further comprises: sending, by the first device, a type of the first MnF to the second device through the interface corresponding to the first MnF.

20. The method according to any one of claims 12 to 19, wherein receiving, by the first device, the control information from the second device comprises:
receiving, by the first device, the control information from the second device through the interface corresponding to the first MnF; and
the method further comprises: receiving, by the first device, management status information of the first MnF from the second device through the interface corresponding to the first MnF.

21. The method according to claim 15, wherein sending, by the first device, the running information of the first ML model to the second device comprises:
sending, by the first device, the running information of the first ML model to the second device through an interface corresponding to the first MnF; and
the method further comprises: sending, by the first device, running information of the first MnF to the second device through the interface corresponding to the first MnF.

22. A communication system, wherein the communication system comprises a first device and a second device, the first device is configured to perform the method according to any one of claims 1 to 10, and the second device is configured to perform the method according to claim 11.

23. A communication apparatus, comprising a unit or a module configured to implement the method according to any one of claims 1 to 11.

24. A communication apparatus, comprising a processor, wherein the processor invokes a computer program stored in a memory, to implement the method according to any one of claims 1 to 11.

25. A computer-readable storage medium, wherein the computer-readable storage medium stores a computer program; and when the computer program runs, the method according to any one of claims 1 to 11 is implemented.

26. A chip, wherein the chip comprises at least one processor and an interface, and the processor is configured to read and execute instructions stored in a memory; and when the instructions are run, the chip is enabled to perform the method according to any one of claims 1 to 11.

27. A computer program product comprising instructions, wherein when the instructions are executed on a computer, the method according to any one of claims 1 to 11 is performed.
